# EUROPÄISCHE PATENTSCHRIFT

(11) **EP 0 896 984 B1**
(45) Veröffentlichungstag und Bekanntmachung des Hinweises auf die Patenterteilung: **02.06.2004**
(21) Anmeldenummer: 98113436.4
(22) Anmeldetag: 18.07.1998
(51) Int. Cl.: C08L 33/06, C08L 33/14, C09J 7/02

(54) **Haftklebstoff mit Nachvernetzungspotential**
adhesive with a potential of post-curing
adhésive avec un potentiel de post-réticulation

(30) Priorität: 12.08.1997 DE 19734835
(43) Veröffentlichungstag der Anmeldung: 17.02.1999
(73) Patentinhaber: Lohmann GmbH & Co. KG, 56567 Neuwied (DE)
(72) Erfinder: Pahl, Andreas, Dr., 56567 Neuwied (DE); Röser, Heinz-Josef, 56294 Gappenach (DE)
(74) Vertreter: Flaccus, Rolf-Dieter, Dr.

(56) Entgegenhaltungen:
- EP-A- 0 378 993

## Beschreibung

Die Erfindung betrifft die Verwendung eines Polymergemisches, das ein oder mehrere Copoly(meth)acrylate, Polyglycidyl(meth)acrylat und ein geeignetes Härtersystem umfaßt, als Haftklebstoff mit Nachvernetzungspotential sowie daraus hergestellte Haftklebebänder.

Als Haftklebstoff wird eine Klebstoffart bezeichnet, die in trockenem (lösemittelfreiem) Zustand bei Zimmertemperatur dauerhaft klebrig ist und bei direktem Kontakt auf einer Vielzahl von verschiedensten Oberflächen haftet, wobei durch Andrücken an die Oberfläche der zu verklebenden Fügeteile eine Benetzung herbeigeführt wird, die ausreichende Haftungskräfte ergibt. Die Anwendung dieser Haftklebstoffe ist weit verbreitet. Sie werden bevorzugt zur Herstellung von diversen selbstklebenden Artikeln eingesetzt, z.B. für Klebebänder und Folien, Selbstklebeetiketten, Pflaster, Briefmarken, u.ä. Der Stand der Technik auf dem Gebiet des Haftklebens wird z.B. in I. Benedek, L.J. Heymans, Pressuresensitive adhesive technology, Marcel Dekker, Inc. 1.Aufl. 1997, wiedergegeben.

Basispolymere der modernen Haftklebstoffe sind vorwiegend Polyacrylate, Natur- und Synthesekautschuke, Polyester, Polychloropren, Polyisobutene, Polyvinylether, Polyurethane und Polysiloxane, die oft in Kombination mit Zusatzstoffen wie beispielsweise Harzen, Weichmachern, Füllstoffen und/oder Stabilisatoren eingesetzt werden. Die Basispolymere fallen in den meisten Fällen als Ergebnis einer Polymerisation in Lösung oder Dispersion an, wobei deren fließfähige Konsistenz Voraussetzung für die weitere Verarbeitung ist.

Grundsätzlich ist zu bemerken, daß die durch Anpressung entwickelten Haftungskräfte und Festigkeitseigenschaften nicht in der Größenordnung liegen, wie sie von den chemisch reagierenden Klebstoffen bekannt sind, bei denen sich räumlich vernetzte Molekülstrukturen ausbilden, so daß sie dann den Duromeren zuzuordnen sind. Haftklebschichten können daher oft ohne Zerstörung der geklebten Substrate von der Fügeteiloberfläche wieder abgezogen werden. Sie werden aus diesem Grunde vielfältig bevorzugt dort eingesetzt, wo eine spätere Trennung der Klebung erwünscht ist.

Für konstruktive Klebungen (s. G. Habenicht, Kleben, Springer Verlag, 2. Auflage 1990, S. S9 - 90), die z.B. bei der Montage in der Automobil- und Bauindustrie angewendet werden, sind Haftklebstoffe nur bedingt geeignet. Da deren Polymerketten meistens nur physikalisch und reversibel vernetzt sind, sind sie kaum kohäsiv belastbar. Ihnen fehlt die in der Praxis unerläßliche hohe thermisch-mechanische innere Festigkeit mit Hochtemperatur- und Lösemittelbeständigkeit. Hier werden deshalb in der Regel Strukturklebstoffe eingesetzt, wie z.B. Epoxidharze oder Cyanoacrylate. Nach der ASTM-Definition sind strukturelle Klebungen gekennzeichnet durch die Verwendung von Fügeteilen mit hoher innerer Festigkeit, wie z.B. Metallen, Holz, Keramik und verstärkten Kunststoffen. Der Klebstoff soll in der Lage sein, innerhalb der vorgeschriebenen Grenzen Spannungsverteilungen zwischen den Fügeteile auszugleichen, ohne daß Spannungsrißbildung auftritt. Außerdem soll die strukturelle Klebung über einen langen Zeitraum den typischen Umwelteinflüssen widerstehen. Den Stand der Technik auf dem Gebiet der Strukturklebstoffe gibt z.B. S. R. Hartshorn (ed.), Structural adhesives, Plenum Press, 1.Auf. 1986, wieder.

Die Aushärtung des strukturellen Klebstoffs mit einhergehendem Kohäsionsaufbau findet üblicherweise in der Klebefuge statt durch thermische Energiezufuhr. Während des Aushärtungsprozesses müssen die zu verklebenden Teile in Lage gehalten und fixiert werden, was häufig durch mechanische Verklammerungen, Nieten oder Nageln erfolgt. Diese müssen nach dem Aushärtungsprozeß wieder entfernt werden, was den Montagevorgang verkompliziert.

Es besteht daher ein Bedarf an Klebstoffen für o.a. Anwendungen, bei denen dieser zunächst als aggressiver Haftklebstoff die zu verbindenden Teile fixieren kann, um anschließend im Produktionsprozeß, wie z.B. einer Lackhärtungsanlage oder einer Bügelpresse im verklebten Zustand auszuhärten.

EP-A-0 378 993 beschreibt Kunststoffzubereitungen, welche als Plastisole vorliegen und 100 Gew.-Teile eines feinteiligen Kunststoffes (Komponente A) sowie 30 bis 300 Gew.-Teile eines Polymerisates aus Glycidyl(meth)acrylat und optional weiteren Comonomeren (Komponente B) enthalten. Als feinteilige Kunststoffe kommen Homo- als auch Copolymerisate des Methacrylsäuremethylesters in Betracht. Zusätzlich können bis zu 50 Gew.-% haftungsverbessernde Mittel, z. B. mehrbasische Carbonsäuren enthalten sein.
Die Plastisole verfestigen sich beim Erhitzen und weisen danach ein erhöhtes Haftvermögen auf. Sie eignen sich insbesondere zum Verkleben und Beschichten von Metallen.
Bei der Herstellung dieser Plastisole müssen die (Co)Polymerisate des Methacrylsäuremethylesters zunächst in ein trockenes Pulver überführt werden, welches sodann in die flüssige Komponente (B) eingerührt wird.

In der EP 0 386 909 wird ein durch UV-Strahlung hergestelltes Prepolymerisat auf Copolyacrylatbasis beschrieben, das mit einem latenten Härter und einem phenolischen Epoxidharz gemischt wird und nach Beschichtung auf einem bahnförmigen Trägermaterial durch UV-Strahlung weiterpolymerisiert wird. Der Haftklebstoff ist thermisch nachvernetzbar dadurch, daß die in der Copolyacrylatmatrix vorhandenen Epoxidharz- und Härteranteile miteinander reagieren. Die Reaktivität dieses Systeme ist jedoch so stark, daß schon bei Raumtemperatur ein langsames Durchhärten stattfindet mit einhergehendem Klebkraftverlust. Die Lagerfähigkeit der daraus hergestellten Klebebänder ist dadurch stark eingeschränkt und verbessert sich erst bei Tieftemperaturlagerung.

In der WO 94/29399 wird eine ähnliche Zusammensetzung beschrieben, jedoch werden kationisch härtende Epoxidharze verwendet.

Die US 5.593.759 beschreibt ein Copolyacrylat auf Lösemittelbasis, das mit einem anionisch härtenden Epoxidharz auf Basis Bisphenol A gemischt wird. Diese Zusammensetzung wird jedoch nicht zur Herstellung eines Haftklebstoffs, sondern eines Trägermaterials verwendet, wobei die Aushärtung schon vorweggenommen wird, so daß das entstehende bahnförmige Material nicht mehr nachvernetzbar ist.

Die US 3.639.500 beschreibt eine Zusammensetzung, enthaltend Epoxidharze auf Bisphenol A, in der Nitrilkautschuke als Rückgradpolymer eingesetzt werden. Auch hier ist die Lagerstabilität stark eingeschränkt.

Die WO 96/00250 schließlich beschreibt eine Zubereitung, zu deren Herstellung Makromonomere auf Basis Methyl- und Glycidylmethacrylat auf eine Polyacrylatkette gepfropft werden. Dieser zusätzliche Verfahrensschritt der Pfropfpolymerisation verkompliziert und verteuert die Problemlösung.

Es besteht daher ein Bedarf an Haftklebstoffen und Haftklebebändern für das konstruktive Kleben, die die vorgenannten Nachteile vermeiden. Diese Haftklebstoffe sollen in der Lage sein, die zu verbindenden Teile zu fixieren und dann im geklebten Zustand durch Zufuhr thermischer Energie ein irreversibles Molekülnetzwerk aufzubauen, das sich durch hohe chemische und Temperaturbeständigkeit auszeichnet. Trotz der Möglichkeit der thermischen Nachhärtung soll die Klebkraft dieser Haftklebstoffe bei Raumtemperatur lange konstant bleiben.

Diese Aufgabe wird gelöst durch die vorliegende Erfindung. Sie beschreibt eine Haftklebstoffzusammensetzung, deren einfache Handhabung darin besteht, Polymerengemische aus Copoly(meth)acrylaten und Polyglycidyl(meth)acrylat sowie einem geeigneten Härtersystem zu verwenden, um Klebebänder herzustellen, die "strukturelles Haftkleben" ermöglichen und sich durch langanhaltende Klebkraft bei Raumtemperatur auszeichnen.

Die Copolyacrylate werden in konventionellen Reaktoren durch Emulsionspolymerisation oder Lösemittelpolymerisation hergestellt.

Die nach dem erfindungsgemäßen Verfahren einzusetzenden Copoly(meth)acrylate werden aus olefinisch ungesättigten Monomeren gebildet, die vorzugsweise aus der Familie der Acrylate stammen, wobei mit dieser Bezeichnung die Acrylsäure und alle Derivate gemeint sind, die sich von der Acrylsäure durch Substitution in der 1- und/oder 2-Stellung und/oder an der Carboxylgruppe herleiten. Zur Haftklebstoffherstellung sind alle Derivate geeignet, die zu Homo- oder Copolymerisaten führen, die eine Glasübergangstemperatur unter -20 °C besitzen. Bevorzugt sind Ester der Acrylsäure und Methacrylsäure, von denen beispielsweise Butyl-, n-Octyl-, Isooctyl-, 2-Ethylhexyl-, Nonyl- oder Isononylacrylat, Decyl- und Dodecylacrylat genannt seien. In bestimmten Fällen, in denen besondere Eigenschaften des Haftklebematerial angestrebt werden, ist es vorteilhaft, wenn weitere radikalisch polymerisierbaren Comonomere eingesetzt werden, wie z.B. Vinylacetat, Vinylpropionat, N-Vinylpyrrolidon, Vinylimidazol, Vinylidenchlorid, 4-Butylstyrol, Mono- oder Diester der Malein- und/oder Fumarsäure.

Polyglycidyl(meth)acrylat kann ebenfalls auf an sich bekannte Weise durch radikalische Polymerisation von Glycidylmethacrylat oder Glycidylacrylat in Lösung unter Verwendung thermischer Initiatoren wie z.B. Peroxiden gewonnen werden. Der Anteil Polyglycidyl(meth)acrylat an der Gesamtmischung beträgt 5 - 60 Gewichts-%, vorzugsweise 10 - 40 Gewichts-%. Sein Molekulargewicht (M_{w}) beträgt 1.000 - 200.000 g/mol, bevorzugt 5.000 bis 50.000 g/mol.

Der Anteil an Härtersystem beträgt 0,3 - 10 Gewichts-%, vorzugsweise 0,5 - 3 Gewichts-%. Als Härter-/Beschleunigersystem kommen grundsätzlich die in C. D. Wright, J. M. Muggee, Epoxy structural adhesives, Kap. 3 in S. R. Hartshorn (ed.), Structural adhesives, Plenum Press, 1. Aufl. 1986 S. 113 - 179, genannten infrage. Besonders weit verbreitet ist die Verwendung von Dicyandiamid (Cyanoguanidin) in Verbindung mit p-Chlorphenyldimethylharnstoff (Monuron) oder 3,4-Dichlorphenyldimethylharnstoff (Diuron). Die Reaktivität der hier eingesetzten Epoxydharze auf Basis Glycidylmethacrylat kann jedoch in vorteilhafter Weise beeinflußt werden, wenn Säuren wie z.B. Adipinsäure oder quartäre Amine wie z.B. Benzyltriethylammoniumchlorid oder Imidazolderivate verwendet werden. Im letzteren Fall können die entsprechenden Partialstrukturen mit Hilfe geeigneter Acrylsäureabkömmlinge direkt in die Polymerkette des Copoly(meth)acrylats eingebaut sein. Bei der Auswahl der Härter-/Beschleunigersysteme ist darauf zu achten, daß latente Härter verwendet werden, die also erst bei erhöhter Temperatur z.B. zwischen 100 - 180°C, nicht aber bei Raumtemperatur reagieren. Auf jeden Fall soll die Temperatur für die Nachvernetzung oberhalb der Trocknungstemperatur, die für die Herstellung der Haftklebebänder benötigt wird, liegen.

Das Gemisch gemäß der Erfindung kann neben den Copoly(meth)acrylaten und Polyglycidyl(meth)acrylaten je nach Anwendungsbereich weitere übliche Zusätze, z.B. Verarbeitungshilfsmittel, Farbstoffe, Antioxidantien, flammhemmende Stoffe, Klebharze und weitere Vemetzersysteme für Copolyacrylate enthalten. Dem Fachmann sind eine große Anzahl solcher Stoffe, die als Handelsprodukte erhältlich sind, bekannt.

Die als Lösemittelklebstoff aufallenden erfindungsgemäßen Gemische können auf den bekannten Maschinen- und Anlagensystemen auf bahnförmige Materialien, wie z.B. Kunststoffolien oder -papiere beschichtet werden und in an sich bekannter Weise zu Haftklebebändern verarbeitet werden. Diese so hergestellten Haftklebebänder mit Nachvernetzungspotential sind bei Raumtemperatur lagerstabil und versandfähig, können später mit den gewünschten Substraten verklebt werden und in der Klebung durch thermische Energiezufuhr gehärtet werden.

Das Kleben mit den Haftklebebändern gemäß der Erfindung erfolgt in der Regel durch Andrücken an die Substratoberfläche bzw. Zusammendrücken zwischen zwei Substraten. Anschließend werden die geklebten Fügeteile Temperaturen von 120-180 °C, vorzugsweise 140-160 °C, ausgesetzt und zwar für eine Zeitdauer von 3-30 Min., vorzugsweise 10-20 Min., abhängig vom gewählten Härtersystem. Man erhält so hochkohäsive, temperaturbeständige, feuchte- und lösemittelbeständige Klebungen mit Scherfestigkeiten, die in den Bereich des strukturellen Klebens vordringen.

Die Erfindung wird durch die folgenden Beispiele veranschaulicht :

### Erläuterungen :

Die dynamische Schälfestigkeit wurde in Anlehnung an DIN EN 1939 geprüft und ist in N/25 mm² angegeben. Dazu wurde der Klebestreifen mittels einer Metallwalze unter Belastung von 2 kg/cm auf eine AFERA-Stahlplatte kaschiert. Mit einer Prüfgeschwindigkeit von 300 mm/min und einem Winkel von 180° wird die Probe von der Prüffläche durch eine Zugprüfmaschine abgezogen.

Die Zugscherfestigkeit wurde in Anlehnung an ISO 4587 bzw. DIN EN 1465 bestimmt. Dazu wurden Überlappungsklebungen mit INOX-Stahlblechen bei einer Prüffläche von 312,5 mm² (Breite: 25 mm, Länge: 12,5 mm) hergestellt. Die so geklebten Fügeteile wurden unter den angegebenen Zeiten und Temperaturen und einem Druck von 6 bar gelagert. Die Zugscherfestigkeit wurde sodann mittels einer Zugprüfmaschine bei einer Prüfgeschwindigkeit von 5 m/min bestimmt. Im Falle der Lagerungstests in den Flüssigkeiten wurde die Zugscherfestigkeit nach einer Rekonditionierungszeit von 1 h gemessen (chemische Beständigkeit).

### Verwendete Bezeichnungen und Abkürzungen :

- AA: = Acrylsäure
- ADIP: = Adipinsäure
- BA: = Butylacrylat
- Dicy: = Dicyandiamid (Dyhard 100 S, Handelsprodukt der Fa. SKW Trostberg)
- Diuron: = (Dyhard UR 200, Handelsprodukt der Fa. SKW Trostberg)
- DMF: = Dimethylformamid
- EHA: = Ethylhexylacrylat
- GMA: = Glycidylmethacrylat
- IDA: = Isodecylacrylat
- MEIO: = Ethylimidazolidonmethacrylat (35 - 37 %ige Lösing in MMA, Norsocryl 104, Handelsprodukt der Fa. Elf Atochem)
- MEK: = Methylethylketon
- MMA: = Methylmethacrylat
- TEBAC: = Triethylbenzylammoniumchlorid
- TiACA: = Titanacetylacetonat

### I. Herstellung der reaktiven Haftklebstoffe

### a) Allgemeine Herstellungsvorschrift der Copoly(meth)acrylate

MEK wird in einem Reaktor vorgelegt. Die Monomeren werden in einen Rundkolben eingewogen und gemischt. In einem zweiten Rundkolben wird die Starterlösung, bestehend aus AIBN (Vazo 64) und MEK, hergestellt. Starterlösung und Monomerengemisch werden gemischt und in einen Tropftrichter eingefüllt. Der Reaktor wird bis auf Siedetemperatur aufgeheizt. Nach Erreichen der Siedetemperatur werden 10 % der Mischlösung (Monomerengemisch + Starterlösung) zugegeben. Anschließend wird der Reaktionsbeginn abgewartet (Rückfluß). Nach Reaktionsbeginn wird die restliche Monomer- und Starterlösung innerhalb von 120 min. zudosiert. Anschließend läßt man noch 180 min. rühren. Nachdem der Reaktor auf unter 60 °C abgekühlt ist, wird mit MEK der gewünschte theoretische Feststoffgehalt eingestellt.

### b) Allgemeine Herstellungsvorschrift für Polyglycidyl(meth)acrylat

253 g Methylethylketon werden unter Stickstoffatmosphäre in einen Dreihalskolben gegeben, der mit Rührer, Rückflußkühler, Thermometer und Tropftrichter ausgerüstet ist. Anschließend wird tropfenweise eine Mischung aus 142 g Glycidylmethacrylat (Handelsprodukt der Fa. Fluka Chemie AG) und 2,11 g Benzoylperoxid über eine Zeitdauer von 3 h zugegeben und noch 2 h weitergerührt. Anschließend wird weiteres Benzoylperoxid (0,31 g in 31 g Methylethylketon) zugefügt und weitere 5 h gerührt. Schließlich wird mit 2,414 g Methylethylketon verdünnt.

Der Epoxidgehalt des so hergestellten Polymers beträgt 0,67 equ./100 g.

### c) Allgemeine Herstellungsvorschrift der erfindungsgemäßen Haftklebstoffe mit Nachvernetzungspotential

Zur Copoly(meth)acrylatlösung aus a) wird die jeweilige Menge Polyglycidyl(meth)acrylatlösung aus b) unter Rühren gegeben. Anschließend wird unter Rühren eine Lösung der Härter/Beschleuniger-Mischung in DMF oder einem anderen geeigneten Lösungsmittel zugefügt. Schließlich folgen ggf. eine Lösung des Acrylatvernetzers, z.B. Titanacetylacetonat in Aceton sowie weitere Zusatzstoffe (Klebharze, Füllstoffe usw.).

### Beispiele

| Nummer | Zusammensetzung Copoly(meth)acrylat ²⁾ | Harz ¹⁾ | TiACA¹⁾ | Härter/Beschleuniger¹⁾ |
|---|---|---|---|---|
| V1 | EHA/AA = 90/10 | -- | 0,3 | -- |
| V2 | EHA/AA = 90/10 | 15 Eurepox 7001³⁾ | 0,3 | Dicy/Diuron = 0,4/0,18 |
| 1 | EHA/AA = 90/10 | 15 poly (GMA) | 0,3 | Dicy/Diuron = 0,4/0,18 |
| 2 | EHA/AA = 90/10 | 30 poly (GMA) | 0,3 | Dicy/TEBAC = 0,3/0,5 |
| 3 | EHA/AA = 90/10 | 30 poly (GMA) | 0,15 | Dicy/Adip = 0,2/1 |
| 4 | EHA/BA/AA = 70/20/10 | 40 poly (GMA) | 0,2 | TEBAC = 1,5 |
| 5 | IDA/MEIO/MMA/AA = 60/10/20/10 | 40 poly (GMA) | 0,2 | Dicy = 0,5 |
| 6 | IDA/AA = 90/10 | 40 poly (GMA) | 0,3 | Dicy/TEBAC = 0,4/0,7 |
| | | 5 Hercolyn D ⁴⁾ | | |
| | | 5 Hercures A 140⁴⁾ | | |

| | | | | |
|---|---|---|---|---|
| ¹⁾ Alle Angaben sind Gewichts-%,bezogen auf Gesamtfeststoff der Mischung. Das Molekulargewicht von poly (GMA) in den Beispielen 1 - 3 beträgt 73.000 g/mol, in den Beispielen 4 - 6 21.000 g/mol (M_{w}). | | | | |
| ²⁾ Monomerenzusammensetzung in Gewichts-%. | | | | |
| ³⁾ Epoxidharz auf Basis Bisphenol A, Handelsprodukt der Fa. Witco GmbH. | | | | |
| ⁴⁾ Klebharze, Handelsprodukte der Fa. Hercules. | | | | |

### II. Herstellung der Haftklebebänder

Die vorgenannten Haftklebstofformulierungem 1 - 6 sowie Vergleichsbeispiele V1 und V2 wurden auf einer Beschichtungsanlage zu Transferklebebändern verarbeitet. Das Auftragsgewicht betrug 100 g/m².

### III. Eigenschaften der hergestellten Haftklebebänder

Die Ergebnisse veranschaulichen die sehr guten Adhäsions- und Kohäsionseigenschaften sowie die chemische Beständigkeit und Alterungsbeständigkeit der nachgehärteten Haftklebstoffe.

### 1. Dynamischer Schälwiderstand [N/25 mm]

| Nr. | | Vernetzungsbedingungen | 10 min 23°C |
|---|---|---|---|
| V1 | vor Vernetzung | | 21 |
| | nach Vernetzung | 10 min 160°C | 26 |
| V2 | vor Vernetzung | | 18 |
| | nach Vernetzung | 10 min 160°C | 13 |
| 1 | vor Vernetzung | | 20 |
| | nach Vernetzung | 10 min 180°C | AB |
| 2 | vor Vernetzung | | 12 |
| | nach Vernetzung | 20 min 140°C | AB |
| 3 | vor Vernetzung | | 17 |
| | nach Vernetzung | 20 min 150°C | AB |
| 4 | vor Vernetzung | | 28 |
| | nach Vernetzung | 15 min 140°C | AB |
| 5 | vor Vernetzung | | 20 |
| | nach Vernetzung | 15 min 140°C | AB |
| 6 | vor Vernetzung | | 36 |
| | nach Vernetzung | 20 min 140°C | AB |
| AB = Adhäsionsbruch | | | |

### 2. Zugscherfestigkeit von Überlappungsklebungen nach ISO 4587 und chem. Beständigkeit [N/312 mm²]

| Nr. | Lagerung | Zugscherfestigkeit | 2 h Bremsflüssigkeit (DOT 4) | 2 h Prüfbenzin | 2 h Salzlauge |
|---|---|---|---|---|---|
| V1 | 10 min/RT/6 bar | 320 | 215 | 311 | 281 |
| | 10 min/160°C/6 bar | 335 | 280 | 324 | 314 |
| V2 | 10 min/RT/6 bar | 354 | 302 | 338 | 310 |
| | 10 min/160°C/6 bar | 1466 | 1336 | 1330 | 1411 |
| 1 | 10 min/RT/6 bar | 348 | 298 | 315 | 309 |
| | 10 min/80°C/6 bar | 1356 | 1412 | 1399 | 1420 |
| 2 | 10 min/RT/6 bar | 368 | 344 | 308 | 322 |
| | 20 min/140°C/6 bar | 1667 | 1751 | 1731 | 1751 |
| 3 | 10 min/RT/6 bar | 329 | 300 | 293 | 289 |
| | 20 min/150°C/6 bar | 1831 | 1854 | 1798 | 1848 |
| 4 | 10 min/RT/6 bar | 356 | 322 | 335 | 341 |
| | 15 min/140°C/6 bar | 2124 | 2226 | 2246 | 2291 |
| 5 | 10 min/RT/6 bar | 370 | 312 | 334 | 351 |
| | 15 min/140°C/6 bar | 2225 | 2412 | 2448 | 2399 |
| 6 | 10 min/RT/6 bar | 336 | 301 | 304 | 309 |
| | 20 min/140°C/6 bar | 1798 | 1887 | 1890 | 1753 |

### 3. Alterungsbeständigkeit/Lagerstabilität

Zur Überprüfung der Alterungsbeständigkeit wurden die Transferklebebänder mit den Formulierungen V2 und 1 80 Tage bei 23°C und 50 % relativer Feuchte gelagert. Das Diagramm zeigt, daß Vergleichsbeispiel 2 (V2) nach 14 Tagen seine Klebkraft verliert, während Beispiel 1, bei dem poly (GMA) anstatt Epoxidharz auf Bisphenol A-Basis verwendet wurde, mindestens 80 Tage lang keinen Klebkraftverlust aufzeigt.

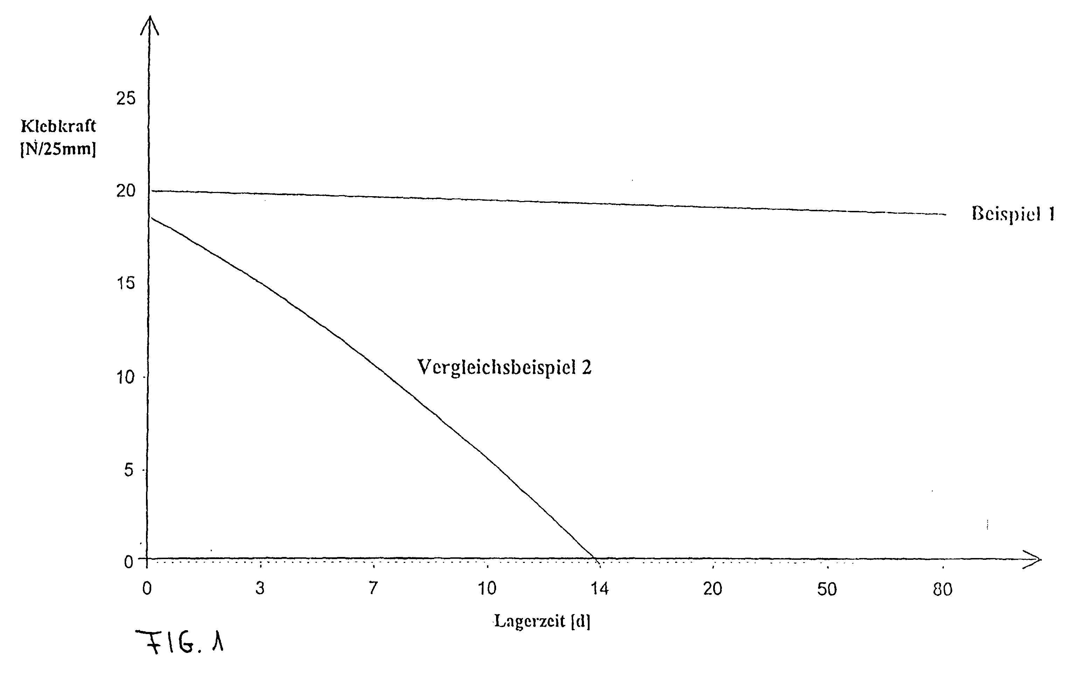

## Patentansprüche

1. Polymerengemisch zur Verwendung als Haftklebstoff mit Nachvernetzungspotential und zur Herstellung von Haftklebebändern, **dadurch gekennzeichnet, daß** das Polymerengemisch
- ein oder mehrere Copoly(meth)acrylate in gelöster Form und
- 5 bis 60 Gew.-%, vorzugsweise 10 bis 40 Gew.-%, Polyglycidylmethacrylat und/oder Polyglycidylacrylat mit einem Molekulargewicht (Mw) von 1.000 bis 200.000, vorzugsweise 5.000 bis 50.000 g/mol, sowie
- 0,3 bis 10 Gew.-% eines latenten Härters oder Härtersystems enthält, der bzw. das nicht bei Raumtemperatur reagiert;
wobei sich die genannten Gewichtsprozentangaben auf den Gesamtfeststoffgehalt des Polymerengemischs beziehen.

2. Polymerengemisch nach Anspruch 1, **dadurch gekennzeichnet, daß** der Härter Benzyltriethylammoniumchlorid ist.

3. Polymerengemisch nach Anspruch 1 oder 2, **dadurch gekennzeichnet, daß** es einen Vorvernetzer enthält, der aus der Gruppe ausgewählt ist, die aus Chelatbildnern wie z. B. Titanacetylacetonat oder Zinkchlorid, Melaminharzen, Benzoguanidinharzen, Harnstoffharzen und Aziridinen besteht.

4. Haftklebeband mit Nachvernetzungspotential, **dadurch gekennzeichnet, daß** die Klebschicht unter Verwendung eines Polymerengemisches nach einem der vorangehenden Ansprüche hergestellt ist.

5. Verwendung eines Polymerengemisches nach einem der Ansprüche 1 bis 3 zur Herstellung von durch Wärmezufuhr härtbaren Haftklebstoffen.

6. Verwendung eines Polymerengemisches nach einem der Ansprüche 1 bis 3 zur Herstellung eines Haftklebebandes.

## Claims

1. Polymer mixture for use as a pressure-sensitive adhesive with post-curing potential, and for the manufacture of pressure sensitive adhesive tapes, **characterized in that** said polymer mixture contains
- one or more copoly(meth)acrylates in dissolved form, and
- 5 to 60%-wt., preferably 10 to 40%-wt., of polyglycidyl methacrylate and/or polyglycidyl acrylate with a molecular weight (W_{w}) of 1,000 to 200,000, preferably 5,000 to 50,000 g/mol, as well as
- 0,3 to 10%-wt. of a latent curing agent or curing
agent system which does not react at room temperature, the weight percentages indicated relating to the total solids content of the polymer mixture.

2. Polymer mixture according to claim 1, **characterized in that** the curing agent is benzyltriethylammonium chloride,

3. Polymer mixture according to claim 1 or 2, **characterized in that** it contains a precuring agent selected from the group consisting of chelating agents such as titanium acetyl acetonate or zinc chloride, melamine resins, benzoguanidine resins, urea resins and aziridines.

4. Pressure sensitive adhesive tape with post-curing potential, **characterized in that** the adhesive layer is produced utilizing a polymer mixture according to any one of the preceding claims.

5. Use of a polymer mixture according to any one of claims 1 to 3 for the manufacture of pressure sensitive adhesives which are curable by addition of heat.

6. Use of a polymer mixture according to any one of claims 1 to 3 for the manufacture of a pressure-sensitive adhesive tape.

## Revendications

1. Mélange de polymères, destiné à une utilisation comme colle auto-adhésive ayant un potentiel de post-réticulation et destiné à la préparation de rubans auto-adhésifs, **caractérisé en ce que** le mélange de polymères contient
- un ou plusieurs copolymères de (méth)acrylates sous forme dissoute, et
- 5 à 60% en poids, de préférence 10 à 40% en poids, de poly(méthacrylate de glycidyle) et/ou de poly(acrylate de glycidyle) ayant une masse moléculaire (Mw) de 1 000 à 200 000, de préférence de 5 000 à 50 000 g/mole,
ainsi que
- 0,3 à 10% en poids d'un durcisseur ou système de durcisseur latent, qui ne réagit pas à la température ambiante;
les indications de pourcentage en poids citées se rapportant à la teneur totale en solides du mélange de polymères.

2. Mélange de polymères selon la revendication 1, **caractérisé en ce que** le durcisseur est le chlorure de benzyltriméthylammonium.

3. Mélange de polymères selon la revendication 1 ou 2, **caractérisé en ce qu'**il contient un agent de réticulation préalable, qui est choisi dans le groupe formé par les agents chélatants, comme par exemple l'acétylacétonate de titane ou le chlorure de zinc, les résines mélamine, les résines benzoguanidine, les résines urée, et les aziridines.

4. Ruban autoadhésif ayant un potentiel de post-réticulation, **caractérisé en ce que** la couche adhésive est préparée en employant un mélange de polymères selon l'une quelconque des revendications précédentes.

5. Utilisation d'un mélange de polymères selon l'une quelconque des revendications 1 à 3, pour préparer une colle auto-adhésive durcissable par apport de chaleur.

6. Utilisation d'un mélange de polymères selon l'une quelconque des revendications 1 à 3, pour préparer un ruban auto-adhésif.
